# EUROPÄISCHE PATENTSCHRIFT

(11) **EP 2 243 808 B1**
(45) Veröffentlichungstag und Bekanntmachung des Hinweises auf die Patenterteilung: **21.12.2016**
(21) Anmeldenummer: 10160677.0
(22) Anmeldetag: 22.04.2010
(51) Int. Cl.: C09D 17/00, C09D 167/08

(54) **Pigmentpaste**
Pigment paste
Pâte pigmentée

(30) Priorität: 24.04.2009 DE 102009018529
(43) Veröffentlichungstag der Anmeldung: 27.10.2010
(73) Patentinhaber: Brillux GmbH & Co. KG, 48163 Münster (DE)
(72) Erfinder: Erber Dietmar, 48143, Münster (DE)
(74) Vertreter: Cohausz & Florack

(56) Entgegenhaltungen:
- EP-A1- 0 311 209
- EP-A1- 1 486 524
- WO-A1-02/096997

## Beschreibung

Die Erfindung betrifft eine Pigmentpaste zum Tönen eines Anstrichmittels, insbesondere eines Anstrichmittels mit hohem Feststoffgehalt sowie ein Anstrichmittel, das die Pigmentpaste enthält. Die Erfindung betrifft ferner ein Verfahren zum Abtönen eines Anstrichmittels unter Verwendung der Pigmentpaste.

Pigmentpasten zum Tönen von Anstrichmitteln, wie beispielsweise Farben und Lacken, sind grundsätzlich bekannt. Pigmentpasten werden üblicherweise durch Dispergieren von Pigmenten und gegebenenfalls Füllstoffen in Bindemitteln oder anderen geeigneten Materialien hergestellt und vor dem Einsatz mit einer geeigneten Grundfarbe vermischt. Derartige Farbmischsysteme sind herkömmlichen Anstrichmitteln insbesondere im Hinblick auf Bevorratung und Logistik überlegen.

Im Vergleich zum Zumischen pulverförmiger Pigmente zu einer Grundfarbe haben Pigmentpasten den Vorteil, dass sie sich einfach und homogen verteilen lassen und gut zu dosieren sind. Weiter vorteilhaft ist, dass sie keinen Farbstaub enthalten, da dieser beim Zumischen leicht die Umgebung verunreinigt. Schließlich können Pigmentpasten auf die erwünschte Farbstärke eingestellt und daher auf einfache Weise über das Volumen in die Grundfarbe eindosiert und eingerührt werden.

Als Bindemittel werden in Pigmentpasten üblicherweise ein oder mehrere Harze eingesetzt, deren Funktion die Benetzung der Pigmente ist. Bei der Auswahl der Harze ist zu berücksichtigen, dass sie mit den jeweils verwendeten Pigmenten sowie mit dem Bindemittelsystem der Grundfarbe verträglich sind. Darüber hinaus ist es günstig, wenn die Harze in Pigmentpasten über alle eingesetzten Pigmente identisch sind, weil es in der Praxis üblich ist, mehrere Pigmentpasten mit einer Grundfarbe zu vermischen.

Ferner vorteilhaft ist, wenn das Harz eine möglichst große Menge an Pigment aufnehmen kann. Hochkonzentrierte Pigmentpasten weisen nämlich gegenüber niederkonzentrierten logistische Vorteile auf. Werden Pigmentpasten auf Basis organischer Lösungsmittel eingesetzt, so hat eine hohe Konzentration an Pigmenten zusätzlich den Vorteil, dass ihr Gehalt an flüchtigen organischen Kohlenwasserstoffen (VOC) aufgrund des niedrigen Lösungsmittelgehalts gering ist. Dies ist insbesondere im Hinblick auf die weltweit immer strengeren Regulierungen für den Gehalt an VOC in Lacken und Farben von großer Relevanz.

Beispiele für Farbmischsysteme auf Basis von Pigmentpasten sind in den Druckschriften EP-A 0 311 209, EP-A 0 012 964 und EP-A 0 507 202 beschrieben.

Es hat sich gezeigt, dass die Auswahl des Harzes einen wesentlichen Aspekt für die praktische Anwendbarkeit von Pigmentpasten darstellt. Dies gilt insbesondere für Pigmentpasten mit hohem Feststoffgehalt. Aufgrund ihres hohen Feststoffgehalts neigen diese Pigmentpasten nämlich dazu, eine zu hohe Viskosität aufzuweisen, was bei der Auswahl des Harzes zu berücksichtigen ist.

Eine hohe Viskosität der Pigmentpasten ist insbesondere deshalb nachteilig, da beim Einsatz üblicher Mischautomaten insbesondere beim Verarbeiten kleiner Mengen keine ausreichende Tropfenform erhalten wird. In diesem Fall weicht der tatsächlich erhaltene Farbton von dem nach Rezeptvorgabe zu erzielendem ab. Eine hohe Viskosität kann ferner zur Bildung von Verunreinigungen führen, da das Pastenmaterial sogenannte "Fäden" zieht.

Die DE 10 2005 060 158 A1 beschreibt eine Pigmentpräparation mit Kondensationsharzen, die als Bindemittel Alkydharze enthalten kann.

Aus der EP 1 401 972 A1 ist eine Pigmentpaste auf Basis organischer Lösungsmittel bekannt, die aufgrund der Verwendung eines speziellen Alkydharzes trotz hohem Pigmentgehalt eine für die praktische Anwendung geeignete Viskosität aufweist.

Wesentliches Merkmal des in dieser Pigmentpaste verwendeten Alkydharzes ist, dass es eine Viskosität von weniger als 5 Pas, gemessen bei 23°C und einer Scherrate von 100 s⁻¹ aufweist. Die geringe Viskosität des Alkydharzes ermöglicht eine Verarbeitbarkeit der Pigmentpaste auch bei hohen Feststoffkonzentrationen.

Alkydharze mit geringer Viskosität können beispielsweise durch eine Einstellung von Molekulargewicht, Öllänge und Verzweigungsgrad erhalten werden. Nachteilig an der beschriebenen Pigmentpaste ist, dass die eingesetzten Alkydharze aufwendig zu synthetisieren und somit kostenintensiv sind.

Die WO 02/096997 A1 beschreibt eine Pigmentpaste auf Basis organischer Lösungsmittel, die ein spezielles verzweigtes Alkydharz enthält, das aufwändig zu synthetisieren ist.

Die EP 1 486 524 A1 beschreibt Epoxid-Addukte und deren Salze als Dispergiermittel, die in Universalabtönpasten zum Abtönen von wässrigen, colöserhaltigen oder lösungsmittelhaltigen Dispersionsfarben verwendet werden können.

Ausgehend vom bekannten Stand der Technik bestand die Aufgabe der Erfindung darin, eine Pigmentpaste der eingangs genannten Art bereitzustellen, die trotz hohem Feststoffgehalt eine für die praktische Anwendung zweckmäßige Viskosität aufweist und in der auch Alkydharze mit einer Viskosität von mehr als 5 Pas, gemessen bei 23°C und einer Schergeschwindigkeit von 100 s⁻¹, eingesetzt werden können.

Diese Aufgabe wird durch eine Pigmentpaste zum Tönen eines Anstrichmittels gelöst, die eine Viskosität gemessen bei 23°C und einer Schergeschwindigkeit von 100 s⁻¹, von 0,1 bis 8 Pas, vorzugsweise von 0,2 bis 5 Pas und insbesondere von 0,3 Pas bis 1 Pas sowie einen Feststoffgehalt von mindestens 60 Gew.% aufweist und mindestens ein organisches Lösungsmittel, mindestens ein Pigment, mindestens ein Alkydharz mit einer Viskosität, gemessen bei 23°C und bei einer Schergeschwindigkeit von 100 s⁻¹, von mindestens 5 Pas, sowie mindestens ein Netzmittel enthält, wobei das Netzmittel ausgewählt ist aus der Gruppe bestehend aus:
Alkylphenolpolyoxyethylenkondensaten, Polyacrylsäuren, Phosphatestern und Fettalkoholetoxylaten, Arylpolyglykolether, Fettalkoholpolyglykolether, Isotridecylalkoholpolyglykolether, Alkylethoxylate, Alkylethersulfate, Alkyletherphosphorsäureester, Polyarylalkylphenolethoxylate, Castor Oil, Polyoxyethylene, Sulfosuccinatsäureester, Polyglykolether, Alkybenzolsulfonate, Fettalkoholsulfate, Polyalkylenglykolether, Alkylpolyglykoside, Cetylalkohole, Benzalkoniumchlorid, Cetrimoniumhalogene, Natriumlaurylsulfat, Laurylglykoside, Polysorbate und Acrylcopolymere, Netzmittel auf Basis modifizierter erdölstämmiger Polymere, auf Basis modifizierter Polyurethane, fettsäuremodifizierte Polyester.

Überraschend wurde gefunden, dass die Viskosität von Alkydharz enthaltenden Pigmentpasten mit hohem Feststoffgehalt durch Zugabe eines Netzmittels derart gesenkt werden kann, dass die Pigmentpasten fließfähig bzw. pumpbar sind und somit aus herkömmlichen Mischautomaten heraus dosiert werden können. So kann durch Zugabe eines Netzmittels der Lösemittelgehalt der erfindungsgemäßen Pigmentpaste auf einen Wert von weniger als 300 g/l gesenkt werden und dennoch eine Viskosität erhalten werden, die den Einsatz herkömmlicher Mischautomaten erlaubt.

Der Einsatz von Netzmitteln in Pigmentpasten ist grundsätzlich bekannt. Netzmittel werden üblicherweise zur Benetzung und Stabilisierung von Pigmentpartikeln bei der Herstellung von Farbpasten verwendet.

In Pigmentpasten auf Basis wässriger Lösungsmittel dienen Netzmittel insbesondere dazu, die Benetzbarkeit der Pigmente und somit die Homogenität der Pigmentpaste zu erhöhen. Auch in Pigmentpasten auf Basis organischer Lösungsmittel finden Netzmittel Anwendung. In diesen Pigmentpasten sollen Netzmittel die Verteilung der Farbpaste in die Bindemittelgrundrezeptur verbessern. Zu diesem Zweck werden die Netzmittel üblicherweise in einer Menge von weniger als 2 Gew.%, bezogen auf das Gesamtgewicht der Pigmentpaste, eingesetzt.

Nicht bekannt war bisher, dass durch den Einsatz von Netzmitteln die Viskosität von Alkydharz enthaltenden Pigmentpasten mit einem Feststoffgehalt von mehr als 60 Gew.% derart gesenkt werden kann, dass die Pigmentpasten pumpbar und fließfähig werden.

Ohne sich auf einen bestimmten Mechanismus festlegen zu wollen, wird angenommen, dass die erfindungsgemäß zu beobachtende Verringerung der Viskosität dadurch zustande kommt, dass das Netzmittel ein Zusammenbrechen der zwischen Alkydharz und Pigment ausgebildeten Struktur verhindert.

Die erfindungsgemäße Pigmentpaste zeichnet sich dadurch aus, dass sie trotz eines Feststoffgehalts von mehr als 60 Gew.% und der Verwendung eines Alkydharzes mit einer Viskosität von mindestens 5 Pas, gemessen bei 23°C und bei einer Schergeschwindigkeit von 100 s⁻¹ Pas als Bindemittel eine Viskosität von 0,1 bis 8 Pas, vorzugsweise 0,2 bis 5 Pas und insbesondere 0,3 bis 1 Pas aufweist.

Eine Viskosität von 0,1 bis 8 Pas ist für die Verarbeitbarkeit von Pigmentpasten optimal, da sie eine besonders einfache Vermischung mit den gängigen Grundfarben erlaubt. Das Dosieren der erfindungsgemäßen Pigmentpaste kann beispielsweise problemlos in handelsüblichen Mischautomaten durchgeführt werden. Die Viskosität der erfindungsgemäßen Pigmentpaste ist nämlich hoch genug, um zu verhindern, dass sich die in ihr enthaltenen Feststoffe wie Pigmente und/oder Füllstoffe am Boden des Vorratsbehälters im Mischautomaten absetzen. Gleichzeitig ist die Viskosität aber niedrig genug, dass sich die Pigmentpaste in eine Grundfarbe hinreichend genau und reproduzierbar eindosieren lässt.

Da die Viskosität der Pigmentpaste erfindungsgemäß durch Zugabe eines Netzmittels auf den für die praktische Anwendung zweckmäßigen Wert eingestellt werden kann, ist es möglich, den Anteil an organischem Lösungsmittel in der Pigmentpaste gering zu halten. Ein niedriger Lösungsmittelgehalt ist nicht nur aus Kostengründen von Vorteil sondern auch insbesondere im Hinblick auf die immer strenger werdenden Bestimmungen hinsichtlich des Gehalts an flüchtigen organischen Stoffen (VOC) in Farben und Lacken.

Die erfindungsgemäße Pigmentpaste enthält mindestens ein organisches Lösungsmittel. Zusätzlich kann die Pigmentpaste auch nicht organische Lösungsmittel wie beispielsweise Wasser enthalten. Gemäß einer bevorzugten Ausführungsform der Erfindung ist das Verhältnis von organischem Lösungsmittel zu nicht organischem Lösungsmittel größer als 1. Insbesondere beträgt das Verhältnis von organischem Lösungsmittel zu nicht organischem Lösungsmittel in der Pigmentpaste mindestens 10 zu 1, vorzugsweise 100 zu 1.

Gemäß einer besonders bevorzugten Ausführungsform der Erfindung beträgt der Anteil des organischen Lösungsmittels in der erfindungsgemäßen Pigmentpaste höchstens 40 Gew.%, vorzugsweise 15 bis 35 Gew.% und insbesondere 17 bis 25 Gew.%.

Aufgrund ihres niedrigen Gehalts an organischem Lösungsmittel, beträgt der Gehalt an flüchtigen organischen Stoffen (VOC) in der erfindungsgemäßen Pigmentpaste vorzugsweise weniger als 300 g/l und insbesondere 250 bis 290 g/l.

Ein großer Vorteil der erfindungsgemäßen Pigmentpaste besteht darin, dass sie auch bei hohem Feststoffgehalt eine hervorragende Viskosität aufweist. So ist es aufgrund der viskositätsvermindernden Eigenschaften des Netzmittels möglich, den Anteil des Feststoffs in der Pigmentpaste auf über 60 Gew.% einzustellen und dennoch Pigmentpasten mit einer Viskosität, gemessen bei 23°C und einer Schergeschwindigkeit von 100 s⁻¹ von 0,1 bis 8 Pas, zu erhalten.

Der Einsatz von Pigmentpasten mit hohem Pigmentgehalt ist insbesondere aus logistischen Gesichtspunkten vorteilhaft. Darüber hinaus führt die Verwendung von Pigmentpasten mit hohem Pigmentgehalt zu Farbmischsystemen, die eine niedrige Trocknungszeit benötigen und aufgrund ihres geringen Gehalts an organischem Lösungsmittel einen ausgesprochen niedrigen Gehalt an VOC aufweisen.

Praktische Versuche haben gezeigt, dass besonders gute Ergebnisse erzielt werden, wenn der Anteil des Feststoffs in der Pigmentpaste im Bereich von 65 Gew.% bis 90 Gew.%, vorzugsweise 70 Gew.% bis 85 Gew.%, jeweils bezogen auf das Gesamtgewicht der Pigmentpaste, beträgt.

Der Anteil des Netzmittels in der Pigmentpaste kann in weiten Bereichen variieren und richtet sich grundsätzlich nach der erwünschten Viskosität der Pigmentpaste. Die jeweils geeignete Menge an Netzmittel hängt dabei sowohl von der Art des eingesetzten Netzmittels als auch von Menge und Art des eingesetzten Alkydharzes sowie des Pigments, des Lösungsmittels und der ggf. vorhandenen weiteren Bestandteile der Pigmentpaste ab.

Üblicherweise können bereits mit einem Netzmittelanteil von 0,5 Gew.%, vorzugsweise von 2 Gew.% bis 5 Gew.% und insbesondere von 2 Gew.% bis 4 Gew.%, jeweils bezogen auf das Gesamtgewicht der Pigmentpaste, hervorragende Ergebnisse erzielt werden.

Grundsätzlich können in der erfindungsgemäßen Pigmentpaste die verschiedensten Netzmittel eingesetzt werden. So werden Alkylphenolpolyoxyethylenkondensate, Polyacrylsäuren, Phosphatester und Fettalkoholetoxylate, also anionischen und nichtionogenen Netzmittel, eingesetzt.

Ferner werden Arylpolyglykolether, Fettalkoholpolyglykolether, Isotridecylalkoholpolyglykolether, Alkylethoxylate, Alkylethersulfate, Alkyletherphosphorsäureester, Polyarylalkylphenolethoxylate und Phosphatester, Castor Oil Polyoxyethylene Sulfosuccinatsäureester, Polyglykolether, Alkybenzolsulfonate, Fettalkoholsulfate, Polyalkylenglykolether, Alkylpolyglykoside, Cetylalkohole, Benzalkoniumchlorid, Cetrimoniumhalogene, Natriumlaurylsulfat, Laurylglykoside, Polysorbate und Acrylcopolymere eingesetzt.

Außerdem werden Netzmittel auf Basis modifizierter erdölstämmiger Polymere, vorzugsweise auf Basis von Polymeren mit aminomodifizierten Ankergruppen, und/oder auf Basis modifizierter Polyurethane, sowie fettsäuremodifizierte Polyester eingesetzt.

Hervorragende Ergebnisse werden mit den Netzmitteln der Marke Solsperse 13300^{®}, Ciba-EFKA 4020^{®} und Ciba-EFKA 6220^{®} erzielt.

Erfindungsgemäß können die verschiedensten organischen und/oder anorganischen Pigmente eingesetzt werden. Als besonders geeignete anorganische Pigmente haben sich Titandioxid, Eisenoxide, Bismutvanadate, und Ruße erwiesen. Besonders geeignete organische Pigmente sind (Di-)Arylide, Azokondensationspigmente, Pyranthrone, Isoindoline Anthrachinone, Derivate von Dioxazinen, Perinone, Naphthol-AS-Derivate, Perylene, Chinacridone, Indanthrene, Diketopyrrolopyrrole und/oder Phthalocyanine.

Der Anteil des Pigments in der erfindungsgemäßen Pigmentpaste kann in weiten Bereichen variieren. Praktische Versuche haben ergeben, dass mit einem Pigmentanteil von mindestens 5 Gew.%, vorzugsweise von 5 bis 70 Gew.%, besonders gute Ergebnisse erzielt werden.

Die Korngröße der Pigmente beträgt vorzugsweise weniger als 20 µm.

Darüber hinaus können die erfindungsgemäßen Pigmentpasten Füllstoffe sowie übliche Additive wie beispielsweise Antischaummittel, Mattierungsmittel, Antiabsetzmittel, Hautverhinderungsmittel wie beispielsweise Methylethylketoxime und/oder andere geeignete Additive enthalten.

Als Füllstoffe können beispielsweise Ton, Silica, Talk, und/oder Glimmer eingesetzt werden.

Als organisches Lösungsmittel eignen sich erfindungsgemäß die verschiedensten Lösungsmittel. Besonders bevorzugt ist der Einsatz von aliphatischen Kohlenwasserstoffen. Mit ihnen können nämlich auf besonders umweltfreundliche Weise Pigmentpasten mit hervorragenden Eigenschaften hergestellt werden. Unter den aliphatischen Kohlenwasserstoffen werden erfindungsgemäß vorzugsweise C₉₋₁₅ Alkane, insbesondere C₉₋₁₅ Isoalkane, eingesetzt.

Für die Zwecke der Erfindung eignen sich ferner die verschiedensten Alkydharze mit einer Viskosität, gemessen bei 23°C und bei einer Schergeschwindigkeit von 100 s⁻¹, von mindestens 5 Pas. Hervorragende Ergebnisse werden mit Alkydharzen erzielt, die eine Viskosität, gemessen bei 23°C und bei einer Schergeschwindigkeit von 100 s⁻¹, von 5 bis 30 Pas, vorzugsweise von 8 bis 25 Pas und insbesondere von 10 bis 20 Pas aufweisen.

Alkydharze sind öl- bzw. fettsäuremodifizierte Polyester aus Polycarbonsäuren und Polyalkoholen sowie deren Umsetzungsprodukte beispielsweise mit Vinylverbindungen, Epoxidharzen, Siliconen, Diisocyanaten, sowie Organometallverbindungen.

Der Anteil des Alkydharzes in der erfindungsgemäßen Pigmentpaste kann in weiten Bereichen variieren. Praktische Versuche haben gezeigt, dass besonders gute Ergebnisse erzielt werden, wenn der Anteil des Alkydharzes in der erfindungsgemäßen Pigmentpaste 10 bis 60 Gew.%, vorzugsweise 15 bis 50 Gew.%, beträgt.

Ein großer Vorteil des Einsatzes von Alkydharzen besteht darin, dass sie mit allen üblicherweise verwendeten Pigmenten (organischen und anorganischen) kompatibel sind.

Erfindungsgemäß bevorzugt werden Alkydharze eingesetzt, die aus Phthalsäure oder Phthalsäureanhydrid hergestellt werden. Hierbei kann ein Teil der Phthalsäure durch Isophthalsäure ersetzt sein. Dies hat den Vorteil, dass ein Akydharzlack mit einer großen Beständigkeit gegen Hitze und Chemikalien erhalten wird.

Neben Phthalsäure können auch aliphatische Dicarbonsäuren als Rohstoffe eingesetzt werden. Hierdurch wird die Elastizität der Alkydharze erhöht. Bevorzugte aliphatische Dicarbonsäuren sind Bernsteinsäure, Adipinsäure, Acelainsäure, 2,2,4-Trimethyladipinsäure, Hebacinsäure, Dodecandisäure und/oder dimerisierte Fettsäuren.

Als Polyol wird vorzugsweise Glycerin eingesetzt. Zur Erzielung bestimmter Eigenschaftsbilder (hohe Molmassen, hohe Viskositäten, schnelle Trocknung, bessere Härte etc.) ist es von Vorteil, Glycerin mit höherfunktionellen und difunktionellen Polyolen zu kombinieren. Besonders geeignete höherfunktionelle Polyole sind beispielsweise Pentaerythrit, Dipentaerythrit, Trimethylolpropan, Trimethylolethan und Sorbitol. Geeignete difunktionelle Polyole sind beispielsweise Ethylenglycol, 1,2-Propylenglycol, 1,3- und 1,4-Butandiol, Diethylenglycol, Dipropylenglycol und Neopentylglycol.

Darüber hinaus werden bei der Herstellung der Alkydharze vorzugsweise langkettige Fettsäuren eingesetzt. Je höher der Grad an Ungesättigtheit der Fettsäuren ist, desto geringer ist die Trocknungszeit der aus ihnen hergestellten Anstrichmittel. Auch weisen diese einen hohen Glanz auf. Mit zunehmendem Sättigungsgrad der Fettsäure nimmt dagegen die Lichtbeständigkeit der Alkydharz enthaltenden Anstrichmittel zu.

Mit steigendem Fettsäuregehalt der Alkydharze sinken üblicherweise die Molekularmasse, der Verzweigungsgrad und die Viskosität der Harze, außerdem die Trocknungsgeschwindigkeit und Härte der damit hergestellten Überzüge, während die Witterungsstabilität zunimmt.

Die Herstellung von Alkydharzen ist bekannt. Üblicherweise werden Veresterungs- und Umesterungsreaktionen eingesetzt, wobei gewöhnlich ein Überschuss der Hydroxylgruppen gegenüber den Carboxylgruppen verwendet wird.

Das mittlere Molekulargewicht des Alkydharzes hat einen großen Einfluss auf dessen Viskosität. Erfindungsgemäß bevorzugt sind Alkydharze mit einem mittleren Molekulargewicht von mehr als 2400 g/Mol, vorzugsweise von 2500 bis 5000 g/mol, und insbesondere von 2600 bis 4000 g/mol.

Der Vorteil bei der Verwendung von Alkydharzen mit einem hohen Molekulargewicht liegt darin, dass die Geschwindigkeit der Filmbildung und die mechanische und chemische Widerstandsfähigkeit des Films beträchtlich zunimmt. Darüber hinaus sind Pigmentpasten, die hochmolekulare Bindemittel enthalten, flukturierungsstabil und lagerstabil.

Auch die Öllänge des Alkydharzes hat einen Einfluss auf dessen Viskosität. Erfindungsgemäß bevorzugt ist der Einsatz von Alkydharzen mit einem Ölgehalt von 50 bis 75 Gew.%, vorzugsweise von 60 bis 70 Gew.%.

Die Säurezahl des eingesetzten Alkyds wirkt sich auf die Dispergierungseigenschaften des Harzes aus. Praktische Versuche haben ergeben, dass die erfindungsgemäße Pigmentpaste besonders gute Dispergierungseigenschaften aufweist, wenn die Säurezahl des Alkydharzes 3 bis 30, vorzugsweise 5 bis 25, insbesondere 9 bis 18 beträgt.

Im Hinblick auf den VOC-Gehalt der erfindungsgemäßen Pigmentpaste hat es sich ferner als besonders günstig erwiesen, wenn Alkydharze eingesetzt werden, deren nichtflüchtiger Anteil, gemessen nach DIN EN ISO 3251 (1h/25°C), 80 bis 99 Gew.%, vorzugsweise 85 bis 97 Gew.%, insbesondere 90 bis 96 Gew.%, beträgt.

Für die praktische Anwendung hat es sich außerdem als zweckmäßig erwiesen, wenn die Pigmentpaste mindestens einen Füllstoff, mindestens ein Antihautmittel sowie Antiabsetzmittel, wie vorzugsweise Schichtsilikate und/oder Kieselsäurederivate enthält.

Die erfindungsgemäße Pigmentpaste eignet sich hervorragend zum Abtönen von Anstrichmitteln. Besonders vorteilhaft ist hierbei, dass die Pigmentpaste einen äußerst geringen Einfluss auf den Glanz des Farbmischsystems hat. Ein weiterer Gegenstand der Erfindung ist somit ein Verfahren zum Abtönen eines Anstrichmittels, in dem eine erfindungsgemäße Pigmentpaste mit einer oder mehreren Grundfarben vermischt wird.

Auf besonders einfache Weise kann das Vermischen der Grundfarbe und der Pigmentpaste mit Hilfe eines Mischautomaten durchgeführt werden.

Im Folgenden wird die Erfindung anhand beispielhafter Rezepturen näher erläutert:

### Beispiel 1: Pigmentpastenrezepturen

Es wurden folgende Langölalkydharze als Bindemittel eingesetzt:
- Typ A:: langöliges Alkydharz aus pflanzlichen Fettsäuren, Ölgehalt 64%, Säurezahl < 18, 95%ig, gelöst in Isoparaffin 170-200, Viskosität >20 Pas bei 100/s bei 23°C
- Typ B:: langöliges Alkydharz aus pflanzlichen Fettsäuren, Ölgehalt 65%, Säurezahl < 10, 85%ig, gelöst in Isoparaffin 170-200, Viskosität >10 Pas bei 100/s bei 23°C

Die eingesetzten Bindemittel können bei Worlée-Chemie GmbH bezogen werden.

In den erfindungsgemäßen Beispielen wurden folgende Netzmittel eingesetzt:
- Typ A:: Solsperse 13300^{®} (Polymer auf Erdölbasis)
- Typ B:: Ciba-EFKA 4020^{®} (Modifiziertes Polyurethan)
- Typ C:: Ciba-EFKA 6220^{®} (Fettsäuremodifizierter Polyester)

Die eingesetzten Netzmittel können bei Lubrizol Deutschland oder bei Ciba Speciality Chemicals Inc. bezogen werden.

### Beispiel 1a: Pigmentpaste A "Oxidgelb"

| | |
|---|---|
| Langölalkydharz Typ A | 23,0 Gew.% |
| Pigment P.Y. 42 | 59,0 Gew.% |
| Netzmittel Typ A | 3,0 Gew.% |
| Antiabsetzmittel 1 | 0,15 Gew.% |
| Antiabsetzmittel 2 | 0,3 Gew.% |
| Antihautmittel | 0,9 Gew.% |
| Isoparaffin 190-220 | 13,65 Gew.% |

Die gemäß Pigmentpastenrezept A hergestellte Rezeptur weist eine Viskosität gemessen bei 23°C und einer Schergeschwindigkeit von 100 s⁻¹ von etwa 1,3 Pas und einen VOC-Wert von ∼287 g/L auf.

### Beispiel 1b: Pigmentpaste B "Gelb"

| | |
|---|---|
| Langölalkydharz Typ A | 42,0 Gew.% |
| Pigment P.Y. 74 | 27,0 Gew.% |
| Netzmittel Typ A | 1,0 Gew.% |
| Kaolin | 5,0 Gew.% |
| Antiabsetzmittel 1 | 0,25 Gew.% |
| Antiabsetzmittel 2 | 0,5 Gew.% |
| Antihautmittel | 0,9 Gew.% |
| Isoparaffin 190-220 | 23,35 Gew.% |

Die gemäß Pigmentpastenrezept B hergestellte Rezeptur weist eine Viskosität gemessen bei 23°C und einer Schergeschwindigkeit von 100 s⁻¹ von etwa 1,3 Pas und einen VOC-Wert von etwa 287 g/L auf.

### Beispiel 1c: Pigmentpaste C "Rot"

| | |
|---|---|
| Langölalkydharz Typ A | 40,0 Gew.% |
| Pigment P.R. 254 | 15,0 Gew.% |
| Netzmittel Typ B | 4,0 Gew.% |
| Kaolin | 19,7 Gew.% |
| Antihautmittel | 0,9 Gew.% |
| Isoparaffin 190-220 | 20,4 Gew.% |

Die gemäß Pigmentpastenrezept C hergestellte Rezeptur weist eine Viskosität gemessen bei 23°C und einer Schergeschwindigkeit von 100 s⁻¹ von etwa 0,8 Pas und einen VOC-Wert von etwa 282 g/L auf.

### Beispiel 1d: Pigmentpaste D "Blau"

| | |
|---|---|
| Langölalkydharz Typ A | 42,0 Gew.% |
| Pigment P.B 15:3 | 17,0 Gew.% |
| Netzmittel Typ A | 2,5 Gew.% |
| Kaolin | 14,0 Gew.% |
| Antiabsetzmittel 1 | 0,25 Gew.% |
| Antiabsetzmittel 2 | 0,5 Gew.% |
| Antihautmittel | 0,9 Gew.% |
| Isoparaffin 190-220 | 22,85 Gew.% |

Die gemäß Pigmentpastenrezept D hergestellte Rezeptur weist eine Viskosität gemessen bei 23°C und einer Schergeschwindigkeit von 100 s⁻¹ von etwa 1,5 Pas und einen VOC-Wert von etwa 290 g/L auf.

### Beispiel 1e: Pigmentpaste E "Grün"

| | |
|---|---|
| Langölalkydharz Typ B | 55,0 Gew.% |
| Pigment P.G. 7 | 13,0 Gew.% |
| Netzmittel Typ C | 1,0 Gew.% |
| Solsperse 5000 | 1,0 Gew.% |
| Kaolin | 11,0 Gew.% |
| Antiabsetzmittel 1 | 0,25 Gew.% |
| Antiabsetzmittel 2 | 0,5 Gew.% |
| Antihautmittel | 0,9 Gew.% |
| Isoparaffin 190-220 | 17,35 Gew.% |

Die gemäß Pigmentpastenrezept E hergestellte Rezeptur weist eine Viskosität gemessen bei 23°C und einer Schergeschwindigkeit von 100 s⁻¹ von etwa 4,2 Pas und einen VOC-Wert von etwa 281 g/L auf.

### Beispiel 2: Vermischen der Pigmentpasten mit einer Grundfarbe

Die in Beispiel 1 hergestellten Pigmentpasten werden unter Verwendung eines herkömmlichen Mischautomaten (Harbil 400^{®} von Fast & Fluid) in herkömmliche Grundfarben eindosiert. Die Grundfarben werden hierbei so gewählt, dass sie entweder das gleiche oder ein ähnliches Bindemittel wie die Pigmentpasten aufweisen.

Hierbei zeigt sich, dass die erfindungsgemäßen Pigmentpasten in hoher Reproduzierbarkeit in die ausgewählten Grundfarben eindosiert werden können. Ferner weisen die erfindungsgemäßen Pigmentpasten eine ausgezeichnete Verträglichkeit und Mischbarkeit mit den Grundfarben auf.

Ein Maß für die Reproduzierbarkeit des Mischvorgangs ist der Farbabstand der Gebinde unterschiedlicher Proben. Dieser Farbabstand wird nach DIN 6174 als dE-Wert gemessen. Je geringer der dE-Wert, desto größer ist die Reproduzierbarkeit des Mischvorgangs. Mit den in den Beispiel 1 hergestellten Pigmentpasten wird eine Reproduzierbarkeit bei Farbtönen gleicher Pastenzugabemenge, gemessen gemäß DIN 6174, von kleiner dE 0,3 erzielt.

Die Viskosität der untersuchten Pigmentpasten ist somit hervorragend dazu geeignet, einen reproduzierbaren Mischvorgang zu gewährleisten.

## Patentansprüche

1. Pigmentpaste zum Tönen eines Anstrichmittels, wobei die Pigmentpaste eine Viskosität, gemessen bei 23°C und einer Schergeschwindigkeit von 100 s⁻¹, von 0,1 bis 8 Pas, sowie einen Feststoffgehalt von mindestens 60 Gew.% aufweist und
- mindestens ein organisches Lösungsmittel,
- mindestens ein Pigment,
- mindestens ein Alkydharz mit einer Viskosität, gemessen bei 23°C und bei einer Schergeschwindigkeit von 100 s⁻¹, von mindestens 5 Pas, und
- mindestens ein Netzmittel enthält,
**dadurch gekennzeichnet, dass** das Netzmittel ausgewählt ist aus der Gruppe bestehend aus:
Alkylphenolpolyoxyethylenkondensaten, Polyacrylsäuren, Phosphatestern und Fettalkoholetoxylaten, Arylpolyglykolether, Fettalkoholpolyglykolether, Isotridecylalkoholpolyglykolether, Alkylethoxylate, Alkylethersulfate, Alkyletherphosphorsäureester, Polyarylalkylphenolethoxylate, Castor Oil, Polyoxyethylene, Sulfosuccinatsäureester, Polyglykolether, Alkybenzolsulfonate, Fettalkoholsulfate, Polyalkylenglykolether, Alkylpolyglykoside, Cetylalkohole, Benzalkoniumchlorid, Cetrimoniumhalogene, Natriumlaurylsulfat, Laurylglykoside, Polysorbate und Acrylcopolymere, Netzmittel auf Basis modifizierter erdölstämmiger Polymere, auf Basis modifizierter Polyurethane, fettsäuremodifizierte Polyester.

2. Pigmentpaste nach Anspruch 1, **dadurch gekennzeichnet, dass** der Anteil des Lösungsmittels in der Pigmentpaste höchstens 40 Gew.%, vorzugsweise 15 bis 35 Gew.%, insbesondere 17 bis 25 Gew.%, beträgt.

3. Pigmentpaste nach Anspruch 1 oder 2, **dadurch gekennzeichnet, dass** der Gehalt an flüchtigen organischen Stoffen VOC weniger als 300 g/l, vorzugsweise 250 bis 290 g/l, beträgt.

4. Pigmentpaste nach einem der Ansprüche 1 bis 3, **dadurch gekennzeichnet, dass** der Anteil des Netzmittels in der Pigmentpaste mindestens 0,5 Gew.%, bezogen auf das Gesamtgewicht der Pigmentpaste, beträgt.

5. Pigmentpaste nach einem der Ansprüche 1 bis 4, **dadurch gekennzeichnet, dass** der Anteil des Pigments 5 Gew.% bis 70 Gew.% beträgt.

6. Pigmentpaste nach einem der Ansprüche 1 bis 5, **dadurch gekennzeichnet, dass** der Anteil des Feststoffs 65 Gew.% bis 90 Gew.%, vorzugsweise 70 Gew.% bis 85 Gew.%, jeweils bezogen auf das Gesamtgewicht der Pigmentpaste, beträgt.

7. Pigmentpaste nach einem der Ansprüche 1 bis 6, **dadurch gekennzeichnet, dass** das Lösungsmittel mindestens einen aliphatischen Kohlenwasserstoff, vorzugsweise ein C₉₋₁₅ Isoalkan, enthält.

8. Pigmentpaste nach einem der Ansprüche 1 bis 7, **dadurch gekennzeichnet, dass** das mittlere Molekulargewicht des Alkydharzes mehr als 2400 g/mol, vorzugsweise 2500 bis 5000 g/mol, und insbesondere 2600 bis 4000 g/mol, beträgt.

9. Pigmentpaste nach einem der Ansprüche 1 bis 8, **dadurch gekennzeichnet, dass** der Ölgehalt des Alkydharzes 50 bis 75 Gew.%, vorzugsweise 60 bis 70 Gew.% beträgt.

10. Pigmentpaste nach einem der Ansprüche 1 bis 9, **dadurch gekennzeichnet, dass** die Säurezahl des Alkydharzes 3 bis 30, vorzugsweise 5 bis 25 und insbesondere 9 bis 18 beträgt.

11. Pigmentpaste nach einem der Ansprüche 1 bis 10, **dadurch gekennzeichnet, dass** der nichtflüchtige Anteil des Alkydharzes, gemessen nach DIN EN ISO 3251 (1h/125°C), 80 bis 99 Gew.%, vorzugsweise 85 bis 97 Gew.% und insbesondere 90 bis 96 Gew.%, beträgt.

12. Pigmentpaste nach einem der Ansprüche 1 bis 11, **dadurch gekennzeichnet, dass** die Pigmentpaste mindestens einen Füllstoff, mindestens ein Antihautmittel, und/oder mindestens ein Antiabsetzmittel enthält.

13. Anstrichmittel enthaltend eine Pigmentpaste nach einem der Ansprüche 1 bis 12 und mindestens eine Grundfarbe.

14. Verfahren zum Abtönen eines Anstrichmittels, **dadurch gekennzeichnet, dass** eine Pigmentpaste nach einem der Ansprüche 1 bis 12 mit einer oder mehreren Grundfarben vermischt wird.

## Claims

1. Pigment paste for tinting a coating agent, the pigment paste having a viscosity, measured at 23°C and a shear rate of 100s⁻¹, of from 0.1 to 8 Pas, and a solids content of at least 60% by weight and containing
- at least one organic solvent,
- at least one pigment,
- at least one alkyd resin having a viscosity, measured at 23°C and at a shear rate of 100 s⁻¹, of at least 5 Pas, and
- at least one wetting agent,
**characterised in that** the wetting agent is selected from the group consisting of:
alkylphenol polyoxyethylene condensates, polyacrylic acids, phosphate esters and fatty alcohol ethoxylates, aryl polyglycol ethers, fatty alcohol polyglycol ethers, isotridecyl alcohol polyglycol ethers, alkyl ethoxylates, alkyl ether sulfates, alkyl ether phosphoric acid esters, polyaryl alkylphenol ethoxylates, castor oil, polyoxyethylenes, sulfosuccinic acid esters, polyglycol ethers, alkylbenzene sulfonates, fatty alcohol sulfates, polyalkylene glycol ethers, alkyl polyglycosides, cetyl alcohols, benzalkonium chloride, cetrimonium halogens, sodium lauryl sulfate, lauryl glucosides, polysorbates and acrylic copolymers, wetting agents based on modified petroleum-based polymers, based on modified polyurethanes, fatty-acid-modified polyesters.

2. Pigment paste according to claim 1, **characterised in that** the proportion of solvent in the pigment paste is at most 40% by weight, preferably 15 to 35% by weight, in particular 17 to 25% by weight.

3. Pigment paste according to claim 1 or claim 2, **characterised in that** the content of volatile organic substances VOC is less than 300 g/l, preferably 250 to 290 g/l.

4. Pigment paste according to any one of claims 1 to 3, **characterised in that** the proportion of wetting agent in the pigment paste is at least 0.5% by weight, based on the total weight of the pigment paste.

5. Pigment paste according to any one of claims 1 to 4, **characterised in that** the proportion of pigment is 5% by weight to 70% by weight.

6. Pigment paste according to any one of claims 1 to 5, **characterised in that** the proportion of solids is 65% by weight to 90% by weight, preferably 70% by weight to 85% by weight, in each case based on the total weight of the pigment paste.

7. Pigment paste according to any one of claims 1 to 6, **characterised in that** the solvent contains at least one aliphatic hydrocarbon, preferably a C₉₋₁₅ isoalkane.

8. Pigment paste according to any one of claims 1 to 7, **characterised in that** the average molecular weight of the alkyd resin is more than 2400 g/mol, preferably 2500 to 5000 g/mol, and in particular 2600 to 4000 g/mol.

9. Pigment paste according to any one of claims 1 to 8, **characterised in that** the oil content of the alkyd resin is 50 to 75% by weight, preferably 60 to 70% by weight.

10. Pigment paste according to any one of claims 1 to 9, **characterised in that** the acid number of the alkyd resin is 3 to 30, preferably 5 to 25, and in particular 9 to 18.

11. Pigment paste according to any one of claims 1 to 10, **characterised in that** the non-volatile proportion of the alkyd resin, measured in accordance with DIN EN ISO 3251 (1h/125°C), is 80 to 99% by weight, preferably 85 to 97% by weight, and in particular 90 to 96% by weight.

12. Pigment paste according to any one of claims 1 to 11, **characterised in that** the pigment paste contains at least one filler, at least one anti-skinning agent, and/or at least one anti-settling agent.

13. Coating agent containing a pigment paste according to any one of claims 1 to 12 and at least one primary colour.

14. Method for tinting a coating agent, **characterised in that** a pigment paste according to any one of claims 1 to 12 is mixed with one or more primary colours.

## Revendications

1. Pâte pigmentée pour teindre un produit de revêtement, la pâte pigmentée ayant une viscosité, mesurée à 23 °C et à une vitesse de cisaillement de 100 s⁻¹, de 0,1 à 8 Pas, ainsi qu'une teneur en substance solides d'au moins 60 % en poids, et contenant
- au moins un solvant organique,
- au moins un pigment,
- au moins une résine alkyde, dont la viscosité, mesurée à 23 °C et à une vitesse de cisaillement de 100 s⁻¹, est au moins de 5 Pas, et
- au moins un agent mouillant, **caractérisée en ce que** l'agent mouillant est choisi parmi le groupe, qui consiste en:
condensés des polyoxyéthylènes d'alkyl phénol, acides polyacryliques, esters de phosphate et étoxylates d'alcools gras, éthers d'arylpolyglycol, éthers de polyglycol d'alcools gras, éthers de polyglycol isotridécyle d'alcool, étoxylates alkyliques, sulfates d'éthers d'alkyle, esters d'acide phosphorique éther d'alkyle, étoxylates de phénol polyarylalkylés, huile de ricin, éthylènes polyoxyliques, esters d'acides de sulfosuccinate, éthers de polyglycol, alkylbenzosulfonates, sulfates d'alcool gras, éthers de glycol polyalkylène, poly glucosides d'alkyle, alcools cétyliques, chlorure de benzalkonium, halogènes cétrimonium, lauryl sulfate de sodium, glucosides lauryl, polysorbates et copolymères acryliques, agents mouillant à base de polymères pétroliers modifiés, à base de polyuréthanes modifiés, de polyesters modifiés par des acides gras.

2. Pâte pigmentée selon la revendication 1,
**caractérisée en ce que** la part du solvant, contenue dans la pâte pigmentée, est au maximum de 40 % en poids, de préférence de 15 à 35 % en poids, en particulier de 17 à 25 % en poids.

3. Pâte pigmentée selon revendication 1 ou 2,
**caractérisée en ce que** la teneur en substances organiques, volatiles VOC est inférieure à 300 g / l, de préférence de 250 à 290 g / 1.

4. Pâte pigmentée selon l'une des revendications 1 à 3,
**caractérisée en ce que** la part d'agent mouillant, contenue dans la pâte pigmentée, est d'au moins 0,5 % en poids par rapport au poids total de la pâte pigmentée.

5. Pâte pigmentée selon l'une des revendications 1 à 4,
**caractérisée en ce que** la part de pigment est de 5 % en poids jusqu'à 70 % en poids.

6. Pâte pigmentée selon l'une des revendications 1 à 5,
**caractérisée en ce que** la part de substances solides est de 65 % en poids jusqu'à 90 % en poids, de préférence de 70 % en poids jusqu'à 85 % en poids, chaque fois par support au poids total de la pâte pigmentée.

7. Pâte pigmentée selon l'une des revendications 1 à 6,
**caractérisée en ce que** le solvant contient au moins un hydrocarbure aliphatique, de préférence un C₉₋₁₅ Iso alcane.

8. Pâte pigmentée selon l'une des revendications 1 à 7,
**caractérisée en ce que** le poids moléculaire moyen de la résine alkyde est supérieur à 2400 g / mol, de préférence de plus de 2500 à 5000 g / mol et, en particulier, de plus de 2600 à 4000 g / mol.

9. Pâte pigmentée selon l'une des revendications 1 à 8,
**caractérisée en ce que** la teneur en huile de la résine alkyde est de 50 à 75 % en poids, de préférence de 60 à 70 % en poids.

10. Pâte pigmentée selon l'une des revendications 1 à 9,
**caractérisée en ce que** l'indice d'acidité de la résine alkyde est de 3 à 30, de préférence de 5 à 25 et, en particulier, de 9 à 18.

11. Pâte pigmentée selon l'une des revendications 1 à 10,
**caractérisée en ce que** la part non volatile de la résine alkyde, mesurée selon DIN EN ISO 3251 (1h / 125 °C), est de 80 à 99 % en poids, de préférence de 85 à 97 % en poids et, en particulier, de 90 à 96 % en poids.

12. Pâte pigmentée selon l'une des revendications 1 à 11,
**caractérisée en ce que** la pâte pigmentée contient au moins une matière de charge, au moins un agent anti-peaux et / ou au moins un agent anti sédimentation.

13. Produit de revêtement contenant une pâte pigmentée selon l'une des revendications 1 à 12 et au moins une couleur de base.

14. Procédé destiné à teindre un produit de revêtement,
**caractérisé en ce que** l'on mélange une pâte pigmentée selon l'une des revendications 1 à 12 avec une ou plusieurs couleurs de base.
